# EUROPÄISCHE PATENTANMELDUNG

(11) **EP 2 772 594 A1**
(43) Veröffentlichungstag der Anmeldung: **03.09.2014**
(21) Anmeldenummer: 14153745.6
(22) Anmeldetag: 04.02.2014
(51) Int. Cl.: E04C 2/288, C04B 28/04, C04B 28/02

(54) **Bauteil aus Beton und Gebäude mit diesem Bauteil**

(30) Priorität: 07.02.2013 DE 102013202042
(71) Anmelder: FRAUNHOFER-GESELLSCHAFT zur Förderung der angewandten Forschung e.V., 80636 Munich (DE)
(72) Erfinder: Karlstetter, Christof, 85604 Zorneding (DE); Klemm, Lars, 80339 München (DE); Krus, Martin, 83620 Feldkirchen-Westerham (DE); Rösler, Doris, 83607 Holzkirchen (DE)
(74) Vertreter: Andrae | Westendorp Patentanwälte Partnerschaft

(57) **Zusammenfassung**

Die Erfindung betrifft ein Bauteil (1) aus Beton, welches nach einer Trocknungszeit von 7 Tagen eine Wasserabgabe von weniger als 40 g/m²/Tag aufweist. Weiterhin betrifft die Erfindung ein Gebäude (100) mit zumindest einem solchen Bauteil, dass eine Innenschale (1), eine Wärmedämmung (2) und eine Außenwand (4) besitzt.

## Beschreibung

Die Erfindung betrifft ein Gebäude mit einem Innenraumklima mit geringer relativer Feuchte und ein hierfür verwendbares Bauteil.

Aus der DIN ISO 11799 ist bekannt, zur Einlagerung von Kulturgütern Depot- bzw. Archivbauten einzusetzen, deren Innenraumklima eine Temperatur zwischen 15 und 21° und eine relative Feuchte zwischen 45 und 55 % bei geringen täglichen und jahreszeitlichen Schwankungen aufweist. Das Innenraumklima kann in gewissen Grenzen an die eingelagerten Güter angepasst sein. Ein solchermaßen eingestelltes Innenraumklima sorgt dafür, dass die eingelagerten Gegenstände nicht durch Klimaeinflüsse beschädigt werden und Sprödbruch durch Austrockung oder Schimmelbefall vermieden werden kann.

Um das Innenraumklima dauerhaft im genannten Bereich zu halten und jahreszeitliche Schwankungen des Klimas auszugleichen, ist aus der Praxis bekannt, maschinelle Klimatisierungseinrichtung einzusetzen, welche die dem Archivraum zugeführte Luft wahlweise befeuchten oder entfeuchten und je nach Außenklima heizen oder kühlen. Nachteilig an diesen bekannten Depot- und Archivbauten sind die hohen Kosten für Betrieb und Wartung der maschinellen Klimatisierungseinrichtung.

Zur Vermeidung dieser hohen Betriebskosten sind daher Depotund Archivbauten erstellt worden, welche aufgrund dicker Wandstärken mit entsprechend hoher Wärmespeicherkapazität und/oder einer Außendämmung und/oder einem reduzierten Luftwechsel ein Innenraumklima bieten, welches weitgehend vom Außenklima entkoppelt ist. In diesem Fall kann eine Fensterlüftung ausreichend sein, beispielsweise während der kühleren Nachtstunden im Sommer, um die Temperatur und Feuchte im gewünschten Bereich zu halten. Kurze Kälteperioden können aufgrund der Wärmespeicherkapazität der verwendeten Baumaterialien und der Außendämmung oftmals ohne Einsatz einer Heizung überbrückt werden, ohne dass die Raumtemperatur unterhalb der gewünschten Werte sinkt. Hierdurch kann auf den Einsatz aufwändiger Lüftungs- und Klimatechnik verzichtet werden, so dass die Betriebskosten des Archivs sinken.

Nachteilig an diesen bekannten Depot- und Archivbauten ist jedoch, dass aufgrund der fehlenden Lüftungsanlagen nur ein geringer Luftaustausch im Archivraum vorhanden ist, so dass die Baufeuchte der verwendeten Baumaterialien das Klima während der ersten Jahre nach Fertigstellung des Gebäudes nachteilig beeinflusst. Diese bekannten Gebäude können daher erst mehrere Jahre nach ihrer Fertigstellung bezogen werden und/oder müssen energieaufwändig trockengeheizt werden. Dies verschlechtert die Energiebilanz des Gebäudes dauerhaft.

Ausgehend von diesem Stand der Technik liegt der Erfindung somit die Aufgabe zugrunde, ein Gebäude bereitzustellen, insbesondere ein Archiv- oder Depotgebäude, welches kurze Zeit nach Fertigstellung bezogen werden kann und dessen Innenraumklima nicht energieaufwändig durch maschinelle Klima- oder Lüftungsanlagen optimiert werden muss.

Die Aufgabe wird erfindungsgemäß durch ein Bauteil gemäß Anspruch 1 und Gebäude gemäß Anspruch 9 gelöst.

Erfindungsgemäß wird vorgeschlagen, für das Gebäude zumindest teilweise ein Bauteil aus wasserarmem Beton einzusetzen. Das dem Beton zugegebene Wasser wird dann ausschließlich oder überwiegend mit dem Zement umgesetzt, so dass nur eine geringe Restfeuchte im Bauteil verbleibt, welche an die Umgebung abgegeben wird. Daher kann das Gebäude in kürzerer Zeit bezogen werden, oftmals bereits unmittelbar nach Fertigstellung, und ein energieaufwändiges Trockenheizen über mehrere Heizperioden bzw. mehrere Jahre kann entfallen. Somit wird der Energieeinsatz in der Bauzeit bis zum Bezugstermin minimiert und durch die raschere Fertigstellung kann der Aufwand für ein provisorisches Archiv der einzulagernden Kulturgüter reduziert werden.

Das erfindungsgemäße Bauteil kann als Betonfertigteil hergestellt sein und als ausgehärtetes Betonbauteil auf die Baustelle verbracht werden. Dort kann das erfindungsgemäße Bauteil mit weiteren Fertigteilen, Stahlbauteilen oder vor Ort gefertigten Massivbauteilen zu einem Gebäude zusammengesetzt werden. In anderen Ausführungsformen der Erfindung kann das erfindungsgemäße Bauteil aus Ortbeton vor Ort gefertigt werden.

Das erfindungsgemäße Bauteil kann neben dem vorgeschlagenen wasserarmen Beton weitere Bestandteile enthalten, beispielsweise Armierungsstahl und/oder Ziegelmauerwerk. Dadurch kann das Bauteil an klimatische oder statische Erfordernisse angepasst werden.

Ein Gebäude kann ganz oder teilweise aus erfindungsgemäß vorgeschlagenen Bauteilen zusammengesetzt sein. In einigen Ausführungsformen der Erfindung kann das erfindungsgemäße Bauteil an allen raumumschließenden Funktionen eingesetzt werden, beispielsweise als Wand-, Boden- oder Deckenauskleidung, für Stützen und Säulen oder für Außenmauerwerk, wobei zumindest die dem Innenraum zugewandte Seite mit dem erfindungsgemäßen Bauteil versehen ist. Auf diese Weise kann übermäßige Baufeuchte vom Innenraum ferngehalten werden, so dass die Baufeuchte in den ersten Jahren der Nutzung das Innenraumklima nicht beeinträchtigt. In diesem Fall kann für andere tragende oder nicht tragende Bestandteile des Gebäudes ein anderer Baustoff eingesetzt werden, beispielsweise ein hochfester Beton, welcher größere Lasten abtragen kann, oder ein Ziegelmauerwerk zur Wärmespeicherung. Die von diesen Baustoffen ausgehende Feuchtigkeit kann durch konstruktive Maßnahmen in den Außenbereich des Gebäudes abgeleitet werden, so dass auch diese Bauteile das Innenraumklima nicht belasten.

In einigen Ausführungsformen der Erfindung kann das vorgeschlagene Bauteil nach einer Trocknungszeit von sieben Tagen eine Wasserabgabe von weniger als 40 g/m²/Tag, weniger als 30 g/m²/Tag, weniger als 20 g/m²/Tag oder weniger als 15 g/m²/Tag aufweisen. Zur Bestimmung der Wasserabgabe wird der zu prüfende Beton in Würfelschalungen von 10 cm Kantenlänge gefüllt und verdichtet, beispielsweise mit Hilfe eines Rütteltisches. Nach 24 Stunden werden die Würfel ausgeschalt und sechs Tage in einem Klima von etwa 20°C und etwa 60 % relativer Feuchte gelagert. Danach erfolgt die Messung der Feuchteabgabe durch Wiegen der Betonwürfel. Danach wird je ein Würfel zusammen mit zwei Päckchen Silicagel als Trocknungsmittel, deren Gewicht vorab bestimmt wurde, luftdicht verschweißt, beispielsweise in einem Aluminiumflachbeutel. Der Betonwürfel wird in diesem Zustand zwei Tage gelagert. Vor und nach der Lagerung wird das Gesamtgewicht von Würfel, Trocknungsmittel und Beutel gemessen. Eine Gewichtsabweichung deutet auf eine Leckage des Beutels hin, so dass die Messung ungültig wird. Nach dem Öffnen des Beutels wird das Einzelgewicht von Betonwürfel und Trocknungsmittel bestimmt, um auf diese Weise die Wasserabgabe des Betonwürfels zu berechnen. Je geringer dabei die Wasserabgabe des Bauteils ist, desto geringer ist der zu erwartende Einfluss des Bauteils auf das Innenraumklima eines mit dem Bauteil ausgestatteten Gebäudes. Dadurch kann ein aufwändiges Trockenheizen vermieden und/oder das Gebäude früher bezogen werden.

In einigen Ausführungsformen der Erfindung kann das vorgeschlagene Bauteil nach einer Trocknungszeit von sieben Tagen eine Wasserabgabe von weniger als 35 g/m²/Tag, weniger als 25 g/m²/Tag, weniger als 15 g/m²/Tag oder weniger als 10 g/m²/Tag aufweisen. Zur Bestimmung der Wasserabgabe wird der zu prüfende Beton in Würfelschalungen von 10 cm Kantenlänge gefüllt und verdichtet, beispielsweise mit Hilfe eines Rütteltisches. Nach 24 Stunden werden die Würfel ausgeschalt und 83 Tage in einem Klima von etwa 20°C und etwa 60 % relativer Feuchte gelagert. Danach erfolgt die Messung der Feuchteabgabe durch Wiegen der Betonwürfel. Danach wird je ein Würfel zusammen mit zwei Päckchen Silicagel als Trocknungsmittel, deren Gewicht vorab bestimmt wurde, luftdicht verschweißt, beispielsweise in einem Aluminiumflachbeutel. Der Betonwürfel wird in diesem Zustand zwei Tage gelagert. Vor und nach der Lagerung wird das Gesamtgewicht von Würfel, Trocknungsmittel und Beutel gemessen. Eine Gewichtsabweichung deutet auf eine Leckage des Beutels hin, so dass die Messung ungültig wird. Nach dem Öffnen des Beutels wird das Einzelgewicht von Betonwürfel und Trocknungsmittel bestimmt, um auf diese Weise die Wasserabgabe des Betonwürfels zu berechnen. Je geringer dabei die Wasserabgabe des Bauteils ist, desto geringer ist der zu erwartende Einfluss des Bauteils auf das Innen¬raum¬klima eines mit dem Bauteil ausgestatteten Gebäudes. Dadurch kann ein aufwändiges Trockenheizen vermieden und/oder das Gebäude früher bezogen werden.

In einigen Ausführungsformen der Erfindung kann der für das erfindungsgemäße Bauteil zu verwendende Beton einen Wasser/Zementwert von weniger als 0,45 oder weniger als 0,4 oder weniger als 0,35 aufweisen. In diesem Fall kann das Wasser weitgehend zur Hydratation des Zements verwendet werden, so dass nur wenige wassergefüllte Zwischenräume im Bauteil verbleiben, aus welchen das Wasser an die Oberfläche und in die Umgebung des Bauteils diffundieren kann.

In einigen Ausführungsformen der Erfindung kann der Beton Dichtungsmittel und/oder Hydrophobierungsmittel und/oder Schaumbildner und/oder Luftporenbildner und/oder wassersaugende Zuschlagstoffe und/oder zumindest einen Superabsorber enthalten. Ein solchermaßen ausgestalteter Beton kann Wasser zurückhalten, so dass das nach der Hydratation des Zements im Bauteil verbleibende Wasser nicht in die Umgebung abgegeben wird.

Ein Superabsorber kann ein Polymer enthalten oder daraus bestehen, welches dazu eingerichtet ist, Wasser zu binden oder mit Wasser zu reagieren. Ein Superabsorber kann zumindest ein hydrophob modifiziertes Kohlenwasserstoffpolymer enthalten oder daraus bestehen. In einigen dieser Ausführungsformen kann der Superabsorber Poly(vinylalkohol-covinylacetat) und/oder Polymethacrylsäure und/oder Polyacrylsäure und/oder cyanoethylierten und/oder teilweise formylierten Polyvinylalkohol und/oder Poly-N-vinyl-2-oxazolidon (Meth)acrylat-Copolymere und/oder N-Alkyl(meth)acrylamid-Derivate enthalten oder daraus bestehen.

Ein Superabsorber kann zumindest ein Salz von hydrophob modifizierten Kohlenwasserstoffpolymeren und/oder Copolymeren enthalten oder daraus bestehen. In einigen dieser Ausführungsformen kann der Superabsorber zumindest ein Kohlenwasserstoffpolymer oder zumindest ein Copolymer enthalten, welches durch Copolymerisation von Acrylsäure und Comonomeren wie Maleinsäure, Itaconsäure, Acrylamid, 2-Methylpropansulfonsäure, 2-Methacrylethansulfonsäure, 2-Hydroxyethylmethacrylat oder Styrolsulfonsäure erhältlich ist.

Ein Superabsorber kann zumindest ein wasserlösliches Polymer mit Hydroxyl-, Amino- oder Carboxylgruppen enthalten oder daraus bestehen. In einigen dieser Ausführungsformen kann der Superabsorber ausgewählt sein aus hydroxyalkylierter Stärke und/oder hydroxyalkyliertem Guar und/oder hydroxyalkyliertes Dextran und/oder zumindest einem Copolymer aus Vinylalkohol und Vinylacetat und/oder Polymethacrylsäure und/oder Acrylat- bzw. Methacrylat-Copolymer, wie beispielsweise Poly(hydroxypropylacrylat-co-acrylamid), Poly(hydroxyethylacrylat-co-diacetonacrylamid) und/oder Poly(hydroxypropylacrylat-co-hydroxyethylacrylat und/oder Hydroxypropyldextran und/oder Hydroxypropylguar und/oder Hydroxypropylstärke und/oder Hydroxypropylcellulose und/oder Hydroxyethylcellulose und/oder Methylcellulose und/oder Hydroxypropylmethylcellulose und/oder Ethylhydroxyethylcellulose.

Ein Superabsorber kann zumindest ein Polypeptid enthalten oder daraus bestehen. In einigen dieser Ausführungsformen kann der Superabsorber ausgewählt sein aus Poly(L-prolin) und Poly(valin-prolinlycin-X-glycin), wobei X eine Aminosäure bezeichnet.

In einigen Ausführungsformen der Erfindung kann der Superabsorber eine Polyacrylsäure und/oder Natriumpolyacrylat sein oder enthalten.

In einigen Ausführungsformen der Erfindung kann der Superabsorber eine Mehrzahl der oben genannten Bestandteile enthalten.

Weiterhin kann die Dichte des Betons durch Schaumbildner und/oder Luftporenbildner gesenkt werden, so dass zur Herstellung des Bauteils weniger Zement und dementsprechend auch weniger Wasser verwendet werden muss. Die geringere Wassermenge führt wiederum dazu, dass das Innenraumklima in geringerem Maße beeinflusst wird, da das Bauteil weniger Wasser abgibt.

In einigen Ausführungsformen der Erfindung kann zumindest ein Dichtungsmittel und/oder Hydrophobierungsmittel und/oder zumindest ein wassersaugender Zuschlagstoff und/oder zumindest ein Superabsorber verkapselt werden, so dass dieser seine Wirksamkeit erst verzögert entfaltet, beispielsweise nach der Hydratation des Zementes.

In einigen Ausführungsformen der Erfindung kann der Beton Blähton und/oder Blähglas und/oder Fasern und/oder Partikel aus Polyvinylchlorid und/oder Polyacetylen enthalten. Diese Materialien können zur Hydrophobierung des Bauteils bzw. zur Ausbildung von Luftporen im Bauteil eingesetzt werden. Hierdurch kann das Bauteil die Schwankungen der Raumfeuchte durch Aufnahme und Abgabe von Feuchte puffern.

In einigen Ausführungsformen der Erfindung kann der Beton eine Polymerdispersion aus Vinylacetat und Ethylen in Wasser enthalten und/oder der Beton kann zumindest eine Polycarbooxyletherverbindung enthalten. Diese Materialien können als Fließverbesserer dienen, so dass der Beton trotz des geringen Wasser/Zementwertes ein günstiges Fließverhalten in der Schalung aufweist. Hierdurch können die Festigkeit des Bauteils und/oder die Wasserdichtigkeit und damit die Abschirmung gegenüber dem Außenklima verbessert sein.

In einigen Ausführungsformen der Erfindung kann das vorgeschlagene Bauteil für ein Gebäude verwendet werden, welches zumindest eine Außenwand aufweist, welche zumindest folgende Teile enthält: ein erfindungsgemäß vorgeschlagenes Bauteil als Innenschale mit einer ersten Seite und einer gegenüberliegenden zweiten Seite, eine Wärmedämmung mit einer ersten Seite und einer gegenüberliegenden zweiten Seite, wobei die erste Seite der Wärmedämmung zur zweiten Seite der Innenschale orientiert ist, sowie eine Außenwand mit einer ersten Seite und einer gegenüberliegenden zweiten Seite, wobei die erste Seite der Außenwand auf der zweiten Seite der Wärmedämmung angeordnet ist. In diesem Fall kann die erste Seite der Innenschale eine raumumschließende Funktion des Gebäudes ausüben, so dass der Innenraum des Gebäudes nur in geringem Maße von der von den Baumaterialien abgegebene Feuchtigkeit beeinflusst ist. Zur Trennung des Innen- vom Außenklima kann eine Wärmedämmung eingesetzt werden, welche beispielsweise Glaswolle oder Mineralwolle oder einen Hartschaum enthält. In einigen Ausführungsformen der Erfindung kann die Wärmedämmung aber auch aus mehreren Einzelschichten zusammengesetzt sein und zusätzlich eine feuchtigkeits- und luftdichte Dampfbremse auf der Warmseite enthalten. Weiterhin weist das Gebäude eine Außenwand auf, welche in einigen Ausführungsformen der Erfindung nach statischen Erfordernissen bemessen sein kann. In diesem Fall kann die Außenwand aus einem lastabtragenden Beton bestehen oder einen solchen enthalten. Die von diesem Beton ausgehende Feuchtigkeitsbelastung wird an die Außenseite des Gebäudes abgegeben, so dass das Innenraumklima nicht beeinträchtigt ist. Daneben kann das Gebäude weitere, hier nicht genannte Teile aufweisen, beispielsweise ein Tragwerk aus einem Stahl- oder Betonskelett, Fenster, oder Lüftungsöffnungen oder weitere, nicht näher bezeichnete aber an sich bekannte Elemente.

In einigen Ausführungsformen der Erfindung kann der Wandaufbau des Gebäudes weiterhin eine Mittelwand mit einer ersten Seite und einer gegenüberliegenden zweiten Seite enthalten, wobei die erste Seite der Mittelwand auf der zweiten Seite des erfindungsgemäßen Bauteils angeordnet ist und die zweite Seite der Mittelwand auf der ersten Seite der Wärmedämmung angeordnet ist. In diesem Fall kann die Außenwand eine größere thermische Masse aufweisen, wenn für die Mittelwand ein massiver Baustoff und/oder ein Latentwärmespeicher eingesetzt werden. Weiterhin kann auch die Mittelwand zum Abtrag statischer Lasten eingesetzt werden, wobei der Baustoff der Mittelwand einzig auf statische Belange optimiert werden kann, da die von der Mittelwand abgegebene Feuchtigkeit durch das erfindungsgemäß vorgeschlagene Bauteil vom Innenraum des Gebäudes weitgehend ferngehalten wird.

In einigen Ausführungsformen der Erfindung kann die Außenwand einen WU-Beton enthalten oder draus bestehen. Ein WU-Beton nach DIN 1045-1: 2001-2007 kann auch als Beton mit hohem Wassereindringwiderstand bezeichnet werden. Der WU-Beton kann einen Kapillarporenraum von weniger als etwa 20 Vol% aufweisen. Eine solche Außenwand verhindert zuverlässig das Eindringen von flüssigem Wasser in die dahinterliegenden Schichten des Wandaufbaus, so dass Feuchtigkeit aus dem Außenraum des Gebäudes nicht oder in geringerem Maße in den Innenraum des Gebäudes eindringen kann. Diese Entkopplung des Innen- und Außenklimas kann zumindest zeitweilig oder zumindest während einiger Jahreszeiten dafür sorgen, dass die im Innenraum gewünschten Klimawerte ohne maschinelle Lüftungsanlage aufrechterhalten werden können.

In einigen Ausführungsformen der Erfindung kann die Außenwand als Betonfertigteil ausgeführt sein. Dies ermöglicht durch hohen Vorfertigkeitsgrad eine rasche Fertigstellung des Gebäudes vor Ort. Weiterhin kann die Trocknungszeit so optimiert werden, dass nur geringe Baufeuchte in den Wandaufbau der Außenwand eingetragen wird.

In einigen Ausführungsformen der Erfindung kann die Mittelwand Ortbeton enthalten oder daraus bestehen. Dies ermöglicht die rationelle Herstellung sehr großer Bauteile und sehr gute statische Eigenschaften. Die schlechten Entfeuchtungseigenschaften einer solchen Mittelwand werden durch das erfindungsgemäß vorgeschlagene Bauteil aus wasserarmem Beton ausgeglichen.

Nachfolgend soll die Erfindung anhand von Figuren ohne Beschränkung des allgemeinen Erfindungsgedankens näher erläutert werden. Dabei zeigt:
Fig. 1 den hydrothermischen Einfluss der Baufeuchte auf das Innenraumklima, wenn bekannte Baustoffe verwendet werden.
Fig. 2 zeigt den hydrothermischen Einfluss des Luftwechsels auf das Innenraumklima eines Gebäudes, wenn bekannte Baustoffe verwendet werden.
Fig. 3 zeigt einen Schnitt durch ein erstes Ausführungsbeispiel eines erfindungsgemäßen Wandaufbaus für ein erfindungsgemäßes Gebäude.
Fig. 4 zeigt einen Schnitt durch ein zweites Ausführungsbeispiel eines erfindungsgemäßen Wandaufbaus für ein erfindungsgemäßes Gebäude.

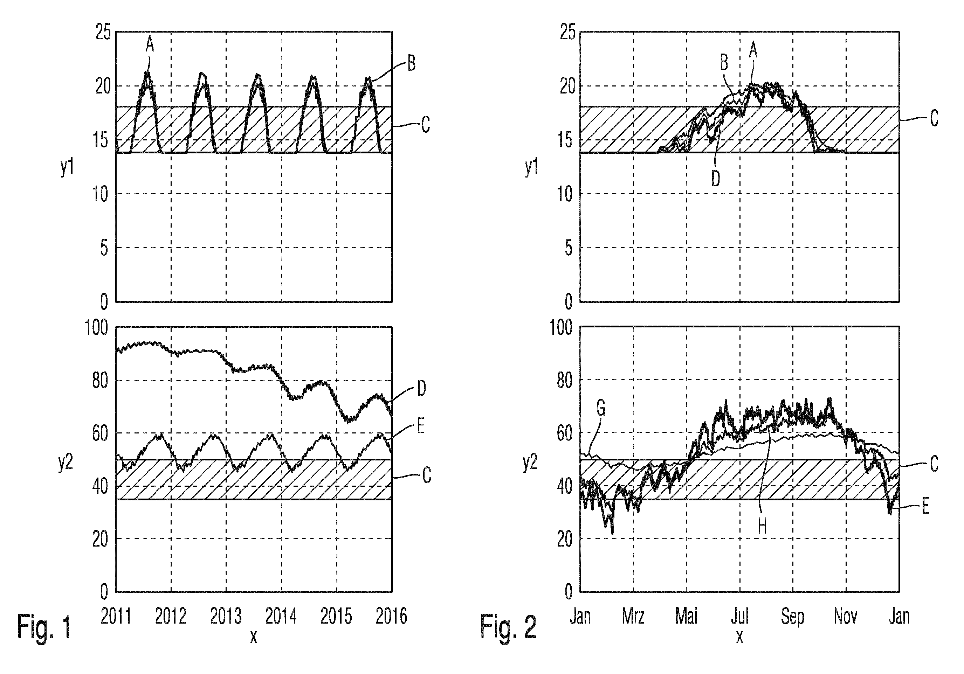

Fig. 1 zeigt den hydrothermischen Einfluss der Baufeuchte auf das Innenraumklima eines Gebäudes. Das Gebäude kann beispielsweise ein Archivbau oder ein Museumsdepot sein, in welchem Kunstgegenstände bzw. Archivgut dauerhaft eingelagert sind. In diesem Fall muss das Innenraumklima so gestaltet sein, dass eine Beschädigung der eingelagerten Güter vermieden wird, beispielsweise durch Austrocknung oder Schimmelbildung. Die Erfindung ist jedoch nicht auf diese Anwendungsbeispiele beschränkt. In anderen Ausführungsformen der Erfindung kann das Gebäude auch ein Wohn- oder Bürogebäude oder ein Industriebau sein, bei welchen sich ein ungünstiges Innenraumklima nachteilig auf das Wohlbefinden der Bewohner oder eingebrachte Produktionsmittel auswirkt.

Fig. 1 zeigt auf der Abszisse X den Zeitablauf über fünf Jahre. Die Ordinate Y₁ zeigt die Raumtemperatur in °C. Die Ordinate Y₂ zeigt die relative Luftfeuchte. Der eingezeichnete Wertebereich C repräsentiert die für die langfristige Lagerung von Kulturgütern notwendigen Bereiche von Temperatur und Feuchte, so dass Schäden an den eingelagerten Gütern verhindert werden. Die Kurve A bzw. E zeigt die jahreszeitlichen Schwankungen von Temperatur und Feuchte, wenn das Gebäude als Passivhaus nach dem Nullenergiestandard betrieben wird. Dies bedeutet, dass das Gebäude nur durch geringen Luftaustausch belüftet wird und keine erhöhte zusätzliche maschinelle Lüftung oder Entfeuchtung erfolgt. Die Messwerte zeigen im Jahresverlauf ein Ansteigen von Temperatur und Feuchte in den Sommermonaten und ein Absinken dieser Werte in den Wintermonaten. Aufgrund des reduzierten Luftaustausches in den Wintermonaten wird eine zu starke Absenkung der relativen Feuchte vermieden.

Die Kurven B bzw. D zeigen den zusätzlichen Einfluss der Baufeuchte von an sich bekannten Bauteilen aus üblichen Betonen. Fig. 1 zeigt, dass aufgrund der Wasserabgabe der verwendeten Baustoffe die relative Feuchte in den ersten drei Jahren nach Fertigstellung des Gebäudes oberhalb 80 % liegt, so dass der Grenzwert für Schimmelbildung überschritten ist. Das Gebäude ist daher in den ersten drei Jahren nach Fertigstellung nicht als Depot nutzbar. Auch in den weiteren Jahren ist der Einfluss der Baufeuchte noch deutlich sichtbar, so dass bei bekannten Gebäuden eine maschinelle Trocknung und/oder Beheizung und Lüftung unumgänglich ist, um das Gebäude in angemessener Zeit nach der Fertigstellung beziehen zu können.

Fig. 2 zeigt den hygrothermischen Einfluss des Luftwechsels auf das Innenraumklima eines Gebäudes. Die gezeigten Messdaten gelten ohne den Einfluss der Baufeuchte, d.h. dargestellt ist das Innenraumklima eines bereits seit längerer Zeit bestehenden, ausgetrockneten Gebäudes. Wiederum ist auf der Abszisse die Zeit eines Jahres aufgetragen und auf der Ordinate Y₁ die Raumtemperatur und auf der Ordinate Y₂ die relative Luftfeuchte für verschiedene Luftwechsel. Dabei zeigt Kurve A bzw. G die Klimadaten für einen Luftwechsel von 0,05 h⁻¹, die Kurve B bzw. H zeigt Klimadaten für einen Luftwechsel von 0,2 h⁻¹ und die Kurve D bzw. E zeigt Klimadaten für einen Luftwechsel von 0,5 h⁻¹. Weiterhin ist wieder ein Sollwert des Klimas als Bereich C dargestellt, wie anhand von Fig. 1 beschrieben.

Fig. 2 zeigt deutlich den positiven Einfluss geringer Luftwechselraten auf das Klima. Ein geringer Luftwechsel ist vorteilhaft, da dann der übermäßige Eintrag von Feuchte und Wärme im Sommer ebenso vermieden wird wie der übermäßige Austrag von Wärme und Feuchte im Winter. Insbesondere die relative Luftfeuchte schwankt in erheblich geringerem Maß. Kurve E zeigt den stark austrocknenden Effekt des kalten Winterklimas auf den Innenraum, wenn ein zu hoher Luftwechsel erfolgt. Dadurch besteht die Gefahr der Austrocknung des Lagergutes mit nachfolgender Rissbildung. Gleichzeitig führt der geringe Luftaustausch jedoch nur zu einem langsamen Austrag der Baufeuchte, wie bereits anhand von Fig. 1 erläutert wurde.

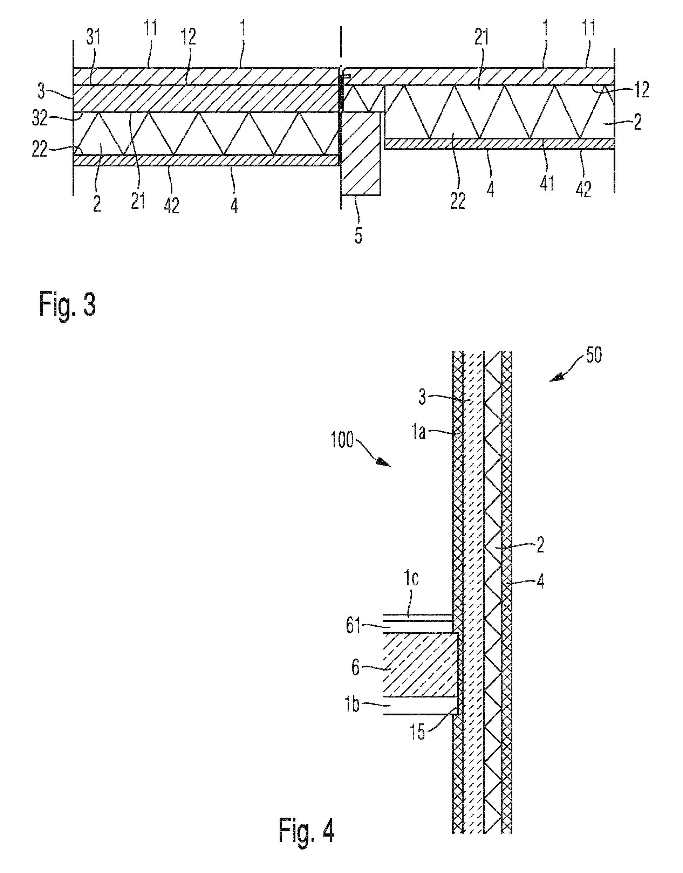

Zur Lösung dieses Problems schlägt die Erfindung vor, in einer Ausführungsform einen Wandaufbau gemäß Fig. 3 zu verwenden. Der Wandaufbau gemäß Fig. 3 umfasst eine Innenschale 1, welche aus dem erfindungsgemäß vorgeschlagenen wasserarmen Beton gefertigt ist. Hierdurch wird das Innenraumklima besonders in den ersten Jahren nach Fertigstellung des Gebäudes positiv beeinflusst, weil die Innenschale 1 über ihre dem Innenraum zugewandte erste Seite 11 nur geringe Feuchtigkeitsmengen von beispielsweise weniger als 10 g pro m² und Tag abgibt. In einigen Ausführungsformen der Erfindung kann die Innenschale 1 eine Dicke von etwa 4 cm bis etwa 10 cm aufweisen und als Fertigteil hergestellt sein. Dies erlaubt eine kontrollierte Fertigung im Betonwerk, so dass das Auftreten von Lunkern oder Kiesnestern reduziert ist, welche Undichtigkeiten der Gebäudehülle hervorrufen könnten.

Wie im rechten Bildteil der Fig. 3 gezeigt ist, kann die zweite Seite 12 der Innenschale 1 unmittelbar an einer ersten Seite 21 einer Wärmedämmung 2 anliegen. Die Wärmedämmung 2 kann in einigen Ausführungsformen der Erfindung ein Hartschaum oder eine Mineralwolle oder ein vakuumisoliertes Paneel sein. In einigen Ausführungsformen der Erfindung kann die Wärmedämmung 2 einen mehrschichtigen Aufbau aufweisen und unterschiedliche wärmedämmende Materialien und/oder Dampfsperren enthalten. Die Wärmedämmung 2 kann in einigen Ausführungsformen eine Dicke von 10 cm bis etwa 40 cm aufweisen. Die Wärmedämmung 2 kann so bemessen sein, dass der gesamte Wandaufbau einen Wärmedurchgangskoeffizienten von weniger als 0,2 W/(m²K) oder weniger als 0,15 W/(m²K) aufweist. In diesem Fall kann das Gebäude als Passivhaus bzw. Nullenergiehaus betrieben werden, so dass außer der bei der Benutzung des Gebäudes entstehenden Abwärme keine Heizenergie zugeführt werden muss.

Weiterhin weist der Wandaufbau gemäß Fig. 3 eine Außenwand 4 auf. Die Außenwand 4 weist eine erste Seite 41 auf, welche an der zweiten Seite 22 der Wärmedämmung 2 angeordnet ist. Die gegenüberliegende zweite Seite 42 der Außenwand 4 bildet die Außenhülle des Gebäudes. Dazu kann die zweite Seite 42 der Außenwand 4 dekorativ gestaltet sein, beispielsweise mit Naturstein, Klinker, Putz und/oder einem Farbanstrich.

Die Außenwand 4 kann ebenfalls als Betonfertigteil oder in Ortbeton hergestellt sein. Die Außenwand 4 kann in einigen Ausführungsformen der Erfindung aus einem wasserundurchlässigen Beton gefertigt sein, so dass das Eindringen von Feuchtigkeit in die Wärmedämmung 2 und den Innenraum des Gebäudes erschwert oder vollständig verhindert ist.

Daneben zeigt Fig. 3 einen optionalen Träger 5. Der Träger 5 kann als Betonstütze oder Stahlbaustütze hergestellt sein. Der Träger 5 kann Teil eines Stahl- oder Betonskeletts des Gebäudes sein. Fig. 3 zeigt weiterhin, wie zwischen dem Träger 5 und der Innenschale 1 ein Teil der Wärmedämmung 2 angeordnet werden kann, um das Auftreten von Wärmebrücken zu verhindern.

Der linke Bildteil von Fig. 3 zeigt einen alternativen Wandaufbau, welcher beispielsweise in einigen Gebäudeabschnitten verwendet werden kann, um statische und/oder klimatische Vorgaben einzuhalten. In anderen Ausführungsformen der Erfindung kann das gesamte Gebäude mit dem in Fig. 3 links dargestellten Wandaufbau aufgebaut sein, so dass der in Fig. 3 rechts dargestellte Wandaufbau nicht zur Anwendung kommt. In wiederum anderen Ausführungsformen der Erfindung kann das Gebäude lediglich den in Fig. 3 rechts gezeigten Wandaufbau aufweisen, so dass der in Fig. 3 links gezeigte Wandaufbau nicht zur Anwendung kommt.

Der links dargestellte Wandaufbau ist mit denselben Bezugszeichen versehen, so dass sich die nachfolgende Beschreibung auf die wesentlichen Unterschiede beschränkt.

Der wesentliche Unterschied ist eine Mittelwand 3, welche zwischen der Innenschale 1 und der Wärmedämmung 2 angeordnet ist. Die Mittelwand 3 kann eine Dicke von etwa 5 cm bis etwa 20 cm aufweisen. In einigen Ausführungsformen der Erfindung kann die Mittelwand 3 aus Ortbeton gefertigt werden. Die Mittelwand 3 kann dazu dienen, eine thermische Speichermasse zu bilden, so dass das Innenraumklima im Innenraum des Gebäudes weniger Schwankungen unterworfen ist. In anderen Ausführungsformen der Erfindung kann die Mittelwand 3 auch zur statischen Verstärkung der Gebäudehülle dienen, so dass in einigen Ausführungsformen der Erfindung auf Stützen 5 verzichtet werden kann.

Fig. 4 zeigt einen weiteren Querschnitt durch eine Außenwand 50 eines Gebäudes 100. Gleiche Bestandteile der Erfindung sind mit gleichen Bezugszeichen versehen, so dass sich die nachfolgende Beschreibung auf die wesentlichen Unterschiede beschränkt. Die Außenwand 50 weist den bereits in Fig. 3 dargestellten vierschichtigen Aufbau auf, enthaltend eine Innenschale 1a, eine Mittelwand 3, eine Wärmedämmschicht 2 und eine Außenwand 4.

Daneben zeigt Fig. 4 einen Deckenanschluss einer Gebäudedecke 6, welche beispielsweise aus Stahlbeton gefertigt sein kann. Wie in Fig. 4 gezeigt ist, weist die Innenschale 1a im Bereich des Deckenanschlusses eine Aussparung 15 auf, in welcher die Decke 6 aufgenommen ist. Auf diese Weise wird die Innenschale 1a auch im Bereich des Deckenanschlusses nicht unterbrochen, so dass Baufeuchte aus den außerhalb liegenden Bauteilen oder Witterungseinflüsse nicht in den Innenraum des Gebäudes eindringen können. Weiterhin ist gezeigt, dass die Decke 6 auf ihrer Unterseite mit einer weiteren Innenschale 1b verkleidet ist, welche ebenfalls aus dem erfindungsgemäß vorgeschlagenen wasserarmen Beton gefertigt ist. Auf der Oberseite der Decke 6 kann ein optionaler Fließestrich 61 aufgebracht sein oder eine ebenfalls optionale Wärme- oder Trittschalldämmung 61. Auf dieser wird ein dritter Teil der Innenschale 1c aufgebracht, so dass der Innenraum des Gebäudes vollständig von Bauteilen umgeben ist, welche aus dem vorgeschlagenen wasserarmen Beton gefertigt sind. Hierdurch wird das Eindringen von Baufeuchte in den Innenraum des Gebäudes zuverlässig verhindert.

Da der für die Innenschale 1a verwendet Beton in einigen Ausführungsformen der Erfindung sämtliche statische Erfordernisse üblicher Betone erfüllen kann, kann der Deckenanschluss Lasten über die Innenschale 1a über die Außenwand 50 abtragen, ohne dass eine Zulassung im Einzelfall erforderlich ist.

Nachfolgend wird ein Ausführungsbeispiel für einen Beton zur Herstellung des vorgeschlagenen Bauteils gegeben. Der Beton enthält dabei folgende Inhaltsstoffe:

| Inhaltsstoff | Masse / kg |
|---|---|
| Zement CEM I/ 42,5 | 260 |
| Wasser | 64 |
| Sand 0/4 | 868 |
| Kies 4/8 | 651 |
| Kies 8/16 | 651 |
| Polycarboxylether-Verbindung | 17 |
| Polymerdispersion aus Vinylacetat und Ethylen in 24 kg Wasser | 52 |

Der auf diese Weise hergestellte Beton weist einen Wasser/Zementwert von etwa 0,34 auf. Zur Bestimmung der Wasserabgabe wurde eine Teilmenge der hergestellten Menge in einer Würfelschale von 10 cm Kantenlänge 24 Std. ausgehärtet. Nach dem Ausschalen wurde der Würfel 6 Tage bei einer Temperatur von 20° und einer relativen Luftfeuchte von 60 % weiter getrocknet. Die Bestimmung der Feuchte erfolgt durch luftdichtes Verpacken des Betonwürfels mit Silicagel als Trocknungsmittel. Nach weiterer Lagerung über 2 Tage kann das Gesamtgewicht und die Einzelgewichte von Trocknungsmittel und Betonwürfel überprüft werden, um die Wasserabgabe des Betons zu bestimmen. Diese beträgt im dargestellten Ausführungsbeispiel 8 g/m² und Tag, so dass das Innenraumklima eines Innenraums eines Gebäudes bereits nach kurzer Trocknungszeit nicht negativ beeinträchtigt wird.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Bauteil (1) aus Beton, welches nach einer Trocknungszeit von 7 Tagen eine Wasserabgabe von weniger als 40 g/m²/Tag aufweist.

2. Bauteil nach Anspruch 1, **dadurch gekennzeichnet, dass** die Wasserabgabe weniger als 30 g/m²/Tag, weniger als 20 g/m²/Tag oder weniger als 15 g/m²/Tag beträgt.

3. Bauteil nach Anspruch 1 oder 2, **dadurch gekennzeichnet, dass** dieses nach einer Trocknungszeit von 84 Tagen eine Wasserabgabe von weniger als 35 g/m²/Tag weniger als 25 g/m² oder weniger 15 g/m²/Tag aufweist.

4. Bauteil nach Anspruch 1 bis 3, **dadurch gekennzeichnet, dass** der Beton einen Wasser/Zementwert von weniger als 0,45 oder weniger als 0,40 oder weniger als 0,35 aufweist.

5. Bauteil nach einem der Ansprüche 1 bis 4, gekennzeichnet, dass der Beton Dichtungsmittel und/oder Hydrophobierungsmittel und/oder Schaumbildner und/oder Luftporenbildner und/oder wassersaugende Zuschlagstoffe und/oder Superabsorber enthält.

6. Bauteil nach Anspruch 5, **dadurch gekennzeichnet, dass** der Beton Blähton und/oder Blähglas und/oder PVC-Fasern und/oder PVC-Partikel und/oder PAC-Fasern und/oder PAC-Partikel enthält.

7. Bauteil nach einem der Ansprüche 1 bis 6, **dadurch gekennzeichnet, dass** der Beton eine Polymerdispersion aus Vinylacetat und Ethylen in Wasser enthält und/oder dass der Beton zumindest eine Polycarboxyether-Verbindung enthält.

8. Bauteil nach einem der Ansprüche 1 bis 7, **dadurch gekennzeichnet, dass** es als Betonfertigteil ausgeführt ist.

9. Gebäude mit zumindest einem Bauteil nach einem der Ansprüche 1 bis 8.

10. Gebäude (100) nach Anspruch 9, **dadurch gekennzeichnet, dass** zumindest eine Außenwand (50) zumindest folgende Teile enthält:
ein Bauteil (1) als Innenschale mit einer ersten Seite (11) und einer gegenüberliegenden zweiten Seite (12) ,
eine Wärmedämmung (2) mit einer ersten Seite (21) und einer gegenüberliegenden zweiten Seite (22), wobei die erste Seite (21) der Wärmedämmung (2) zur zweiten Seite (12) der Innenschale (1) orientiert ist,
eine Außenwand (4) mit einer ersten Seite (41) und einer gegenüberliegenden zweiten Seite (42), wobei die erste Seite (41) der Außenwand (4) auf der zweiten Seite (22) der Wärmedämmung (2) angeordnet ist.

11. Gebäude nach Anspruch 10, weiterhin enthaltend eine Mittelwand (3) mit einer ersten Seite (31) und einer gegenüberliegenden zweiten Seite (32), wobei die erste Seite (31) der Mittelwand (3) auf der zweiten Seite (12) des Bauteils (1) angeordnet ist und die zweite Seite (32) der Mittelwand (3) auf der ersten Seite (21) der Wärmedämmung (2) angeordnet ist.

12. Gebäude nach einem der Ansprüche 10 und 11, **dadurch gekennzeichnet, dass** die Außenwand (4) als Betonfertigteil ausgeführt ist.

13. Gebäude nach Anspruch 10 bis 12, **dadurch gekennzeichnet, dass** die Mittelwand (3) Ortbeton enthält oder daraus besteht.

14. Gebäude nach einem der Ansprüche 10 bis 13, **dadurch gekennzeichnet, dass** die Innenschale (1) eine Dicke von etwa 4 cm bis etwa 10 cm aufweist.
